# EUROPEAN PATENT SPECIFICATION

(11) **EP 3 242 271 B1**
(45) Date of publication and mention of the grant of the patent: **13.02.2019**
(21) Application number: 17169319.5
(22) Date of filing: 03.05.2017
(51) Int. Cl.: G06T 7/00

(54) **METHOD, SYSTEM AND APPARATUS FOR ASSIGNING IMAGE INTERPRETATION TASK**
VERFAHREN, SYSTEM UND VORRICHTUNG ZUR ZUWEISUNG EINER BILDINTERPRETATIONSAUFGABE
PROCÉDÉ, SYSTÈME ET APPAREIL D'ATTRIBUTION DE TÂCHE D'INTERPRÉTATION D'IMAGE

(30) Priority: 06.05.2016 CN 201610299317
(43) Date of publication of application: 08.11.2017
(73) Proprietor: Nuctech Company Limited, TongFang Building, Shuangqinglu, Haidian District Beijing 100084 (CN)
(72) Inventor: WANG, Tao, BEIJING, 100084 (CN); TIAN, Long, BEIJING, 100084 (CN); WU, Nannan, BEIJING, 100084 (CN)
(74) Representative: Delumeau, François Guy

(56) References cited:
- US-A1- 2005 251 398
- US-A1- 2007 115 123
- Ning Zhang ET AL: "A STUDY OF X-RAY MACHINE IMAGE LOCAL SEMANTIC FEATURES EXTRACTION MODEL BASED ON BAG-OF- WORDS FOR AIRPORT SECURITY STUDY OF X-RAY MACHINE IMAGE LOCAL SEMANTIC FEATURES EXTRACTION MODEL BASED ON BAG-OF-WORDS FOR AIRPORT SECURITY 46", INTERNATIONAL JOURNAL ON SMART SENSING AND INTELLIGENT SYSTEMS VOL. 8, NO. 1, MARCH 2015 45, 1 March 2015 (2015-03-01), pages 1-20, XP055408168, Retrieved from the Internet: URL:http://s2is.org/Issues/v8/n1/papers/pa per3.pdf [retrieved on 2017-09-20]

## Description

### TECHNICAL FIELD

The present disclosure relates to the field of security inspection, and more particularly, to a method and an apparatus for assigning image interpretation task.

### BACKGROUND

As to security checks at public area such as highway, railway station and the like, conventional technical inspection on baggage of staff to be checked is often performed on scanned images generated by scanning with radioactive radiation (such as X-ray) emitted from a specific equipment (e.g., security machines). Then, the scanned images are assigned to security inspectors at an image interpretation workstation for image interpretation, so as to interpret whether or not any dangerous goods are included in the baggage. If a dangerous item is suspected, the staff may be required to open his/her baggage on the spot for verification.

In the existing process, the efficiency for assigning the scanned images is low, and the quality of the image interpretation can not be guaranteed.

Therefore, there is a need for a novel method, system and apparatus for assigning image interpretation task.

The above-mentioned information disclosed in this section is for the purpose of enhancing the understanding of background of the present disclosure and may therefore include information that does not constitute a prior art that is known to those of ordinary skill in the art.

Patent publication documents US 20070115123 A1 (referred to as "D1" hereinbelow) and US 20050251398 A1 (referred to as "D2" hereinbelow), and non-patent document "A Study of X-ray Machine Image Local Semantic Features Extraction Model Based on Bag-of-words for Airport Security" (Ning Zhang et al., referred to as "D3" hereinbelow) disclose related art of the present disclosure.
D1 discloses a system for associating baggage with a passenger comprises a biometric reader that captures a biometric measure from a passenger, a boarding document comprising a machine-readable boarding identifier, and a baggage tag comprising a machine-readable baggage identifier.
D2 discloses a dynamically configurable threat scanning machine management system cooperating with a pooled operator image analysis unit to scan items for threats.
D3 discloses analyzing visual semantics of dangerous goods images and applying a local features extraction method. After classification and summarization, the method was used to train the screeners for particular image recognition.

### SUMMARY

There are provided a computer-implemented method, and an apparatus for assigning image interpretation task by the present disclosure, which are able to improve efficiency for assigning the image interpretation task and quality of the image interpretation.

Other features and advantages of the present disclosure will become apparent from the following detailed description, or in part, by practice of the present disclosure.

According to an aspect of the disclosure, there is provided a computer-implemented method for assigning an image interpretation task, including: acquiring a scanned packet image of a packet when the packet enters a security machine; performing risk analysis on the scanned packet image to assess an image risk degree of the scanned packet image; evaluating an image interpretation level for security inspectors of an image interpretation workstation; and assigning, based on a preset strategy, the scanned packet image to a corresponding image interpretation workstation according to the image risk degree and the image interpretation level
wherein the performing risk analysis on the scanned packet image to assess an image risk degree of the scanned packet image comprises:
analyzing (S250) a proportion of substances contained in the scanned packet image using a substance identification algorithm, the substances comprising organic matter, inorganic matter and/or mixtures; and
determining (S260) the image risk degree of the scanned packet image according
to the proportion of substances,
wherein the method further comprises:
setting (S240) in advance a corresponding image risk degree for the scanned packet image based on the proportion of substances of the scanned packet image, and
wherein when the proportion of the substance is indicative of that the proportion of organic matter occupied in pixels of the scanned packet image is high, the image risk degree of the scanned packet image is considered to be high.

According to an embodiment of the disclosure, the performing risk analysis on the scanned packet image to assess an image risk degree of the scanned packet image includes: analyzing content complexity of the scanned packet image using an image processing algorithm; and determining the image risk degree of the scanned packet image according to the content complexity.

According to an embodiment of the disclosure, the method further includes: setting in advance a corresponding content complexity based on a color and/or a shape of the scanned packet image.

According to an embodiment of the disclosure, the performing risk analysis on the scanned packet image to assess an image risk degree of the scanned packet image further includes: analyzing a category of substances contained in the scanned packet image using a substance identification algorithm; and determining the image risk degree of the scanned packet image according to the category of substances.

According to an embodiment of the disclosure, the method further includes: setting in advance a corresponding image risk degree for the scanned packet image based on the category of substances of the scanned packet image.

According to an embodiment of the disclosure, the evaluating an image interpretation level for security inspectors of an image interpretation workstation includes: recording working hours and/or working habits and/or consistency and inconsistency between image interpretation conclusion and actual conclusion of the security inspectors; counting average interpretation time and/or proportion of consistency between image interpretation conclusion and actual conclusion and/or image processing operations performed during the image interpretation of the security inspectors based on the working hours and/or the working habits and/or the consistency and inconsistency between image interpretation conclusion and actual conclusion; and determining the image interpretation level for security inspectors according to the average interpretation time and/or the proportion of consistency between image interpretation conclusion and actual conclusion and/or the image processing operations performed during the image interpretation.

According to an embodiment of the disclosure, the evaluating an image interpretation level for security inspectors of an image interpretation workstation includes: evaluating the image interpretation level for security inspectors based on input external data.

According to an embodiment of the disclosure, the input external data includes set levels of the security inspectors and/or service year and/or working experience.

According to an embodiment of the disclosure, the preset strategy includes: a principle of distribution according to work and/or a level matching principle, wherein the principle of distribution according to work is implemented by assigning the scanned packet image preferentially according to idle time of the security inspectors; and the level matching principle is implemented by assigning the scanned packet image to a security inspector having an image interpretation level corresponding to a risk degree.

According to an embodiment of the disclosure, the scanned packet image comprises an X-ray image.

According to an embodiment of the disclosure, there is provided a system for assigning image interpretation task, including: a scanned packet image acquisition module configured to acquire a scanned packet image of a packet when the packet enters a security machine; an image risk degree analysis module configured to perform risk analysis on the scanned packet image to assess an image risk degree of the scanned packet image; an image interpretation level evaluation module configured to evaluate an image interpretation level for security inspectors of an image interpretation workstations; and an image interpretation task assignation module configured to assign, based on a preset strategy, the scanned packet image to a corresponding image interpretation workstation according to the image risk degree and the image interpretation level,
wherein the image risk degree analysis module (420) is further configured to analyze a proportion of substances contained in the scanned packet image using a substance identification algorithm, the substances comprising organic matter, inorganic matter and/or mixtures; and determine the image risk degree of the scanned packet image according to the proportion of substances,
wherein the system further comprises a second preset module configured to set in advance a corresponding image risk degree for the scanned packet image based on the proportion of substances of the scanned packet image, and
wherein when the proportion of the substance is indicative of that the proportion of organic matter occupied in pixels of the scanned packet image is high, the image risk degree of the scanned packet image is considered to be high.

According to an embodiment of the disclosure, the image risk degree analysis module includes: a content complexity analysis unit configured to analyze content complexity of the scanned packet image using an image processing algorithm; and a first risk degree determination unit configured to determine the image risk degree of the scanned packet image according to the content complexity.

According to an embodiment of the disclosure, the system further includes a first preset module configured to set in advance a corresponding content complexity based on a color and/or a shape of the scanned packet image.

According to an embodiment of the disclosure, the image risk degree analysis module includes: a substance category analysis unit configured to analyze a category of substances contained in the scanned packet image using a substance identification algorithm; and a second risk degree determination unit configured to determine the image risk degree of the scanned packet image according to the category of substances.

According to an embodiment of the disclosure, the second preset module is further configured to set in advance a corresponding image risk degree for the scanned packet image based on the category of substances of the scanned packet image.

According to an embodiment of the disclosure, the image interpretation level evaluation module includes: a recording unit configured to record working hours and/or working habits and/or consistency and inconsistency between image interpretation conclusion and actual conclusion of the security inspectors; a statistics module configured to count average interpretation time and/or proportion of consistency between image interpretation conclusion and actual conclusion and/or image processing operations performed during the image interpretation of the security inspectors based on the working hours and/or the working habits and/or the consistency and inconsistency between image interpretation conclusion and actual conclusion; and an image interpretation level determination unit configured to determine the image interpretation level for security inspectors according to the average interpretation time and/or the proportion of consistency between image interpretation conclusion and actual conclusion and/or the image processing operations performed during the image interpretation.

According to an embodiment of the disclosure, the system further includes an input module configured to input external data, the image interpretation level evaluation module is configured to evaluate the image interpretation level for security inspectors based on the input external data.

According to an embodiment of the disclosure, the input external data comprises set levels of the security inspectors and/or service year and/or working experience.

According to an embodiment of the disclosure, the preset strategy includes: a principle of distribution according to work and/or a level matching principle, wherein the principle of distribution according to work is implemented by assigning the scanned packet image preferentially according to idle time of the security inspectors; and the level matching principle is implemented by assigning the scanned packet image to a security inspector having an image interpretation level corresponding to a risk degree.

According to an embodiment of the disclosure, the scanned packet image includes an X-ray image.

According to yet another aspect of the disclosure, there is provided an apparatus for assigning an image interpretation task, including a security machine, an image interpretation workstation and a processor, the processor is connected with the security machine and the image interpretation workstation, respectively, wherein the security machine is configured to scan a packet entering the security machine to generate a scanned packet image; the processor is configured to: acquire the scanned packet image for risk analysis to assess an image risk degree of the scanned packet image; evaluate an image interpretation level for security inspectors of the image interpretation workstation; and assign, based on a preset strategy, the scanned packet image to a corresponding image interpretation workstation according to the image risk degree and the image interpretation level,
wherein the risk analysis comprises:
analyzing a proportion of substances contained in the scanned packet image using a substance identification algorithm, the substances comprising organic matter,
inorganic matter and/or mixtures; and
determining the image risk degree of the scanned packet image according to the proportion of substances,
wherein the processor is further configured to:
set in advance a corresponding image risk degree for the scanned packet image based on the proportion of substances of the scanned packet image, and
wherein when the proportion of the substance is indicative of that the proportion of organic matter occupied in pixels of the scanned packet image is high, the image risk degree of the scanned packet image is considered to be high.

According to an embodiment of the disclosure, the scanned packet image comprises an X-ray image.

According to an embodiment of the disclosure, the apparatus further includes a controller, the controller includes the system according to any embodiment described above.

According to the method, the system and the apparatus for assigning image interpretation task provided by the present disclosure, the complexity of security image is evaluated and the index is established to evaluate the level of security inspectors, such that the image can be assigned to an appropriate security inspector based on the image condition and the level of existing security inspectors, thus the overall quality and efficiency of the image interpretation can be improved.

It is to be understood that both the foregoing general description and the following detailed description are merely exemplary and do not limit the present disclosure.

### BRIEF DESCRIPTION OF THE DRAWINGS

The above and other features and advantages of the present disclosure will become more apparent by describing in detail the exemplary embodiments thereof with reference to the accompanying drawings.
Fig. 1 is a flow chart illustrating a method for assigning image interpretation task according to an exemplary embodiment of the disclosure;
Fig. 2 is a flow chart illustrating assessment of image risk degree based on the method for assigning image interpretation task as shown in Fig. 1;
Fig. 3 is a flow chart illustrating evaluation of image interpretation level based on the method for assigning image interpretation task as shown in Fig. 1;
Fig. 4 is a block diagram illustrating a system for assigning image interpretation task according to an exemplary embodiment of the disclosure; and
Fig. 5 is a block diagram illustrating an apparatus for assigning image interpretation task according to an exemplary embodiment of the disclosure.

### DETAILED DESCRIPTION

The exemplary embodiment will now be described more fully with reference to the accompanying drawings. However, the exemplary embodiments can be implemented in a variety of forms and should not be construed as limited to the embodiments set forth herein. Rather, the embodiments are provided so that this disclosure will be thorough and complete and will fully convey the concepts of exemplary embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that one or more of the specific details may be practiced without practicing the technical solutions of the present disclosure, and other methods, components, materials, devices, steps, and the like may be employed. In other instances, well-known structures, methods, devices, implementations, materials, or operations are not shown or described in detail to avoid obscuring aspects of the present disclosure.

The block diagrams illustrated in the drawings are merely functional entities and do not necessarily correspond to any physically separate entity. In other words, these functional entities may be implemented in software form, part or whole of these functional entities may be implemented in one or more software-hardened modules, or these functional entities may be implemented in different network and/or processor devices and/or microcontrollers to.

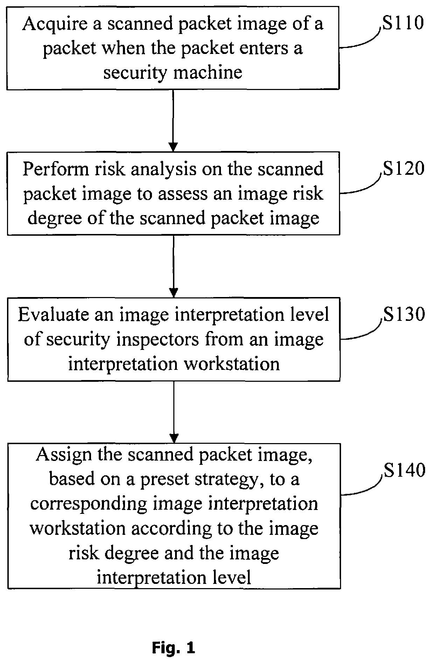

Fig. 1 is a flow chart illustrating a method for assigning image interpretation task according to an exemplary embodiment of the disclosure.

As shown in Fig. 1, in step S110, a scanned packet image of a packet is acquired when the packet enters a security machine.

In step S120, risk analysis is performed on the scanned packet image to assess an image risk degree of the scanned packet image.

In an exemplary embodiment, the risk analysis performed on the scanned packet image for assessing the image risk degree of the scanned packet image is implemented by analyzing content complexity of the scanned packet image using an image processing algorithm; and determining the image risk degree of the scanned packet image according to the content complexity. Furthermore, a corresponding content complexity may be set in advance based on a color and/or a shape of the scanned packet image

In an embodiment, the image processing algorithm may include substance density recognition to analyze the content complexity of the scanned packet image according to a distribution and a degree of concentration of pixels with different density in the image. For example, when the density of substance is concentrated, it is indicative of that the substances in the image are relatively simple; on the contrary, it is indicative of that the substances in the image are relatively complex.

In an exemplary embodiment, the risk analysis performed on the scanned packet image for assessing the image risk degree of the scanned packet image is implemented by analyzing a proportion and/or a category of substances contained in the scanned packet image using a substance identification algorithm; and determining the image risk degree of the scanned packet image according to the proportion and/or the category of substances. Herein, the substances may include organic matter, inorganic matter and/or mixtures. Furthermore, a corresponding image risk degree may be set in advance for the scanned packet image based on the proportion and/or the category of substances of the scanned packet image.

For example, the substance identification algorithm may include organic matter identification, inorganic substance identification, and mixture identification to analyze the proportion and/or the category of substances contained in the scanned packet image.

In an exemplary embodiment, a result provided by using other image analysis algorithms (e.g., image substance identification algorithms that can identify whether the image contains substances such as firearms, explosives, high-density and hard-to-penetrate objects, drugs, fruits and the like) may be employed to derive a score (e.g., the score is high when any dangerous good is identified, while the score is low when no dangerous good is identified), such that the risk degree of scanned packet image can be determined according to a level of the score.

In step S130, an image interpretation level of security inspectors from an image interpretation workstation is evaluated.

In an exemplary embodiment, the image interpretation level of security inspectors from the image interpretation workstation is evaluated by recording working hours and/or working habits and/or consistency and inconsistency between image interpretation conclusion and actual conclusion of the security inspectors; counting average interpretation time and/or proportion of consistency between image interpretation conclusion and actual conclusion and/or image processing operations performed during the image interpretation of the security inspectors based on the working hours and/or the working habits and/or the consistency and inconsistency between image interpretation conclusion and actual conclusion; and determining the image interpretation level for security inspectors according to the average interpretation time and/or the proportion of consistency between image interpretation conclusion and actual conclusion and/or the image processing operations performed during the image interpretation.

In another exemplary embodiment, the image interpretation level of security inspectors from the image interpretation workstation is evaluated based on input external data. Herein, the input external data may include set levels of the security inspectors and/or service year and/or working experience.

In step S140, the scanned packet image is assigned, based on a preset strategy, to a corresponding image interpretation workstation according to the image risk degree and the image interpretation level.

In an exemplary embodiment, the preset strategy includes a principle of distribution according to work and/or a level matching principle. Herein, the principle of distribution according to work may be implemented by assigning the scanned packet image preferentially according to idle time of the security inspectors; while the level matching principle may be implemented by assigning the scanned packet image to a security inspector having an image interpretation level corresponding to a risk degree.

In an exemplary embodiment, the scanned packet image, the image risk degree and the image interpretation level of security inspectors are stored in a server system.

In an exemplary embodiment, the scanned packet image includes an X-ray image.

According to the method for assigning image interpretation task, complexity of a security image is evaluated by means of image processing or substance identification algorithm, and an indicator is established to evaluate image interpretation level of security inspectors. Once a new security image is acquired, the image is assigned to a security inspector who has a corresponding level of image interpretation and is relatively idle according to the complexity degree of the image as well as the image interpretation level and workload of current security inspectors, so as to improve the overall quality and efficiency of the image interpretation. Accordingly, defects can be overcome in the existing method, where the image interpretation task is assigned typically in manners such as one-to-one correspondence, random assignment or able-man-do-more-work when the security inspectors interpret images (referred to as "image interpretation"). Specifically, the manner of "one-to-one correspondence" is implemented such that each security machine corresponds to a security inspector, where such correspondence is determined in advance and, generally, cannot be adjusted. The manner of "random assignment" is implemented by randomly assigning images generated by a group of security machines to a group of security inspectors, where it is completely random for the security inspectors to interpret certain images as long as the group relationship is determined. The manner of "able-man-do-more-work" is implemented by assigning images generated by a group of security machines to a security inspector, from a group of security inspectors, who is currently in an idle state. These methods have the following shortcomings:
1) the assignment of images cannot be performed reasonably in view of work intensity of the security inspectors: a security inspector who interprets images quickly will be assigned with more images, often resulting in a situation of "busy man is busier, idle man is idler"; and
2) the assignment of images cannot be performed reasonably in view of work capability of the security inspectors: complexity of images and difficulty for interpreting the same cannot be told due to the lack of intelligence, thus the images are assigned to all security inspectors without discrimination, often resulting in a situation where a complex image assigned to a security inspector with low level cannot be treated timely and effectively, thereby increasing time consumption and workload of security inspection, and also reducing efficiency and effectiveness thereof.

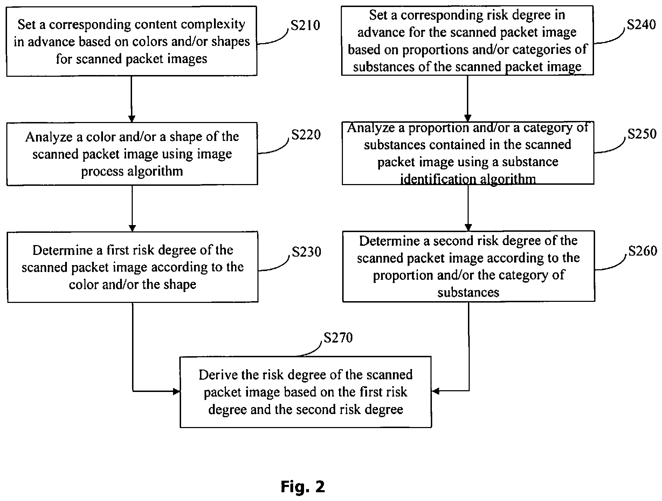

Fig. 2 is a flow chart illustrating assessment of image risk degree based on the method for assigning image interpretation task as shown in Fig. 1.

As shown in Fig. 2, in step S210, a corresponding content complexity is set in advance based on colors and/or shapes for scanned packet images.

In step S220, a color and/or a shape of the scanned packet image is analyzed using image process algorithm.

In step S230, a first risk degree of the scanned packet image is determined according to the color and/or the shape.

In step S240, a corresponding risk degree is set in advance for the scanned packet image based on proportions and/or categories of substances of the scanned packet image.

In step S250, a proportion and/or a category of substances contained in the scanned packet image is analyzed using a substance identification algorithm.

In step S260, a second risk degree of the scanned packet image is determined according to the proportion and/or the category of substances.

In an exemplary embodiment, the substances include organic matter, inorganic matter and/or mixtures, or may be classified into more detailed categories such as gasoline, alcohol, metal copper, metal iron, drugs and the like, which are not limited herein.

According to an exemplary embodiment, when the proportion of the substance is indicative of that the proportion of organic matter occupied in pixels of the entire scanned image is high, the risk degree of the scanned image may be considered to be high; when the proportion of inorganic matter occupied in pixels of the entire scanned image is low, the risk degree of the scanned image may be considered to be low. The category of substances may be set such that, as long as a certain substance such as drugs is contained in the packet, the risk degree of the scanned image may be determined to be high, regardless of the specific proportion of its pixels occupied in the entire scanned image.

According to an exemplary embodiment, the risk degree of the scanned image may be classified into a high risk degree and a low risk degree, or may be classified into risk degrees I, 2, 3 and up to N, depending on the proportion and/or the category of substances, which is not limited herein.

In step S270, the risk degree of the scanned packet image is derived based on the first risk degree and the second risk degree.

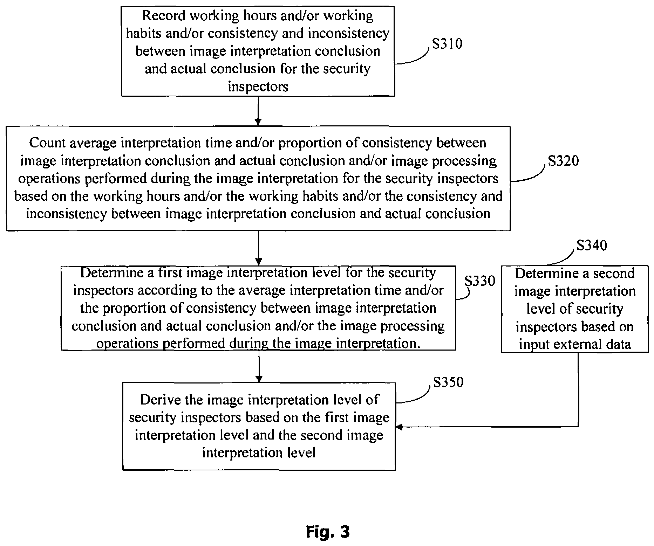

Fig. 3 is a flow chart illustrating evaluation of image interpretation level based on the method for assigning image interpretation task as shown in Fig. 1.

As shown in Fig. 3, in step S310, working hours and/or working habits and/or consistency and inconsistency between image interpretation conclusion and actual conclusion are recorded for the security inspectors.

In step S320, average interpretation time and/or proportion of consistency between image interpretation conclusion and actual conclusion and/or image processing operations performed during the image interpretation are counted for the security inspectors based on the working hours and/or the working habits and/or the consistency and inconsistency between image interpretation conclusion and actual conclusion.

In step S330, a first image interpretation level is determined for the security inspectors according to the average interpretation time and/or the proportion of consistency between image interpretation conclusion and actual conclusion and/or the image processing operations performed during the image interpretation.

In step S340, a second image interpretation level of security inspectors is determined based on input external data.

In an exemplary embodiment, the input external data may include set levels of the security inspectors and/or service year and/or working experience.

In step S350, the image interpretation level of security inspectors is derived based on the first image interpretation level and the second image interpretation level.

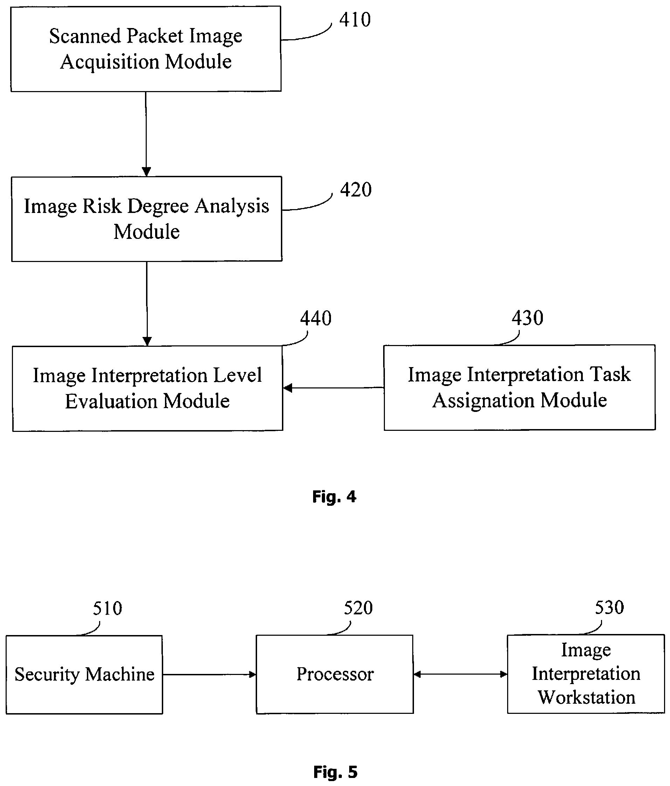

Fig. 4 is a block diagram illustrating a system for assigning image interpretation task according to an exemplary embodiment of the disclosure.

As shown in Fig. 4, the system includes: a scanned packet image acquisition module 410 configured to acquire a scanned packet image of a packet when the packet enters a security machine; an image risk degree analysis module 420 configured to perform risk analysis on the scanned packet image to assess an image risk degree of the scanned packet image; an image interpretation level evaluation module 430 configured to evaluate an image interpretation level for security inspectors of an image interpretation workstations; and an image interpretation task assignation module 440 configured to assign, based on a preset strategy, the scanned packet image to a corresponding image interpretation workstation according to the image risk degree and the image interpretation level.

In an exemplary embodiment, the image risk degree analysis module 420 includes: a content complexity analysis unit configured to analyze content complexity of the scanned packet image using an image processing algorithm; and a first risk degree determination unit configured to determine the image risk degree of the scanned packet image according to the content complexity.

In an exemplary embodiment, the system further includes a first preset module configured to set in advance a corresponding content complexity based on a color and/or a shape of the scanned packet image.

In an exemplary embodiment, the image risk degree analysis module 420 includes: a substance proportion and/or category analysis unit configured to analyze a proportion and/or a category of substances contained in the scanned packet image using a substance identification algorithm; and a second risk degree determination unit configured to determine the image risk degree of the scanned packet image according to the proportion and/or the category of substances.

In an exemplary embodiment, the substances include organic matter, inorganic matter and/or mixtures.

In an exemplary embodiment, the system further includes a second preset module configured to set in advance a corresponding image risk degree for the scanned packet image based on the proportion and/or the category of substances of the scanned packet image.

In an exemplary embodiment, the image interpretation level evaluation module 430 includes: a recording unit configured to record working hours and/or working habits and/or consistency and inconsistency between image interpretation conclusion and actual conclusion of the security inspectors; a statistics module configured to count average interpretation time and/or proportion of consistency between image interpretation conclusion and actual conclusion and/or image processing operations performed during the image interpretation of the security inspectors based on the working hours and/or the working habits and/or the consistency and inconsistency between image interpretation conclusion and actual conclusion; and an image interpretation level determination unit configured to determine the image interpretation level for security inspectors according to the average interpretation time and/or the proportion of consistency between image interpretation conclusion and actual conclusion and/or the image processing operations performed during the image interpretation.

In an exemplary embodiment, the system further includes an input module configured to input external data, the image interpretation level evaluation module is configured to evaluate the image interpretation level for security inspectors based on the input external data.

In an exemplary embodiment, the input external data includes set levels of the security inspectors and/or service year and/or working experience.

In an exemplary embodiment, the preset strategy includes a principle of distribution according to work and/or a level matching principle. Herein, the principle of distribution according to work may be implemented by assigning the scanned packet image preferentially according to idle time of the security inspectors; and the level matching principle may be implemented by assigning the scanned packet image to a security inspector having an image interpretation level corresponding to a risk degree.

In an exemplary embodiment, the scanned packet image includes an X-ray image.

With respect to the apparatus of the above embodiment, the specific mode in which each module performs the operation has been described in detail in the embodiment relating to the method, and the description thereof will not be described in detail herein.

According to the system for assigning image interpretation task provided by the present disclosure, work intensity, work ability and work habits of the security inspectors can be automatically counted and recorded during image interpretation of the security inspectors, and risk analysis is performed on each X-ray image at the background, such that the image interpretation task can be assigned to the security inspectors, as well as can be adjusted automatically according to the work intensity, work ability and work habits that are automatically counted and recorded, in combination with complexity of the X-ray perspective image.

Fig. 5 is a block diagram illustrating an apparatus 500 for assigning image interpretation task according to an exemplary embodiment of the disclosure.

As shown in Fig. 5, the apparatus includes: a security machine 510, an image interpretation workstation 530 and a processor 520, the processor 520 is connected with the security machine 510 and the image interpretation workstation 530, respectively. Herein, the security machine 510 may be configured to scan a packet entering the security machine to generate a scanned packet image; the processor 520 may be configured to: acquire the scanned packet image for risk analysis to assess an image risk degree of the scanned packet image; evaluate an image interpretation level for security inspectors of the image interpretation workstation; and assign, based on a preset strategy, the scanned packet image to a corresponding image interpretation workstation according to the image risk degree and the image interpretation level.

In an exemplary embodiment, the scanned packet image includes an X-ray image.

In an exemplary embodiment, the apparatus further includes a controller, and the controller may include the system according to any embodiment described above.

In an exemplary embodiment, the processor 520 includes an X-ray image risk analysis system configured to collect X-ray images acquired by the security machine and analyze the X-ray images to determine its risk profile.

In an exemplary embodiment, a method for analyzing the X-ray images may be implemented by analyze content complexity of the X-ray images using image processing algorithm. For example, an image with a single color may be indicative of "simple" (considered as low level of risk) while an image with many colors may be indicative of "complex" (considered as high level of risk). In another exemplary embodiment, proportions of organic matter, inorganic matter and mixtures contained in the X-ray image may be analyzed using substance identification algorithm. For example, when the proportion of pixels occupied by organic matter is high, the risk degree may be considered to be high; while the proportion of pixels occupied by inorganic matter is low, the risk degree may be considered to be low. Alternatively, the risk degree may be determined according to level of score derived based on results provided by other image analysis algorithm.

In an exemplary embodiment, the processor 520 includes a system for recording and analyzing security inspector's working configured to record working hours (e.g., image interpretation time and idle time, average image interpretation time, maximum image interpretation time and minimum image interpretation time), working habits (e.g., frequently used image processing method) of security inspectors, and analyze working intensity (continuous working time, the number of interpreted images), working habits and image interpretation level of the security inspectors based on the records.

In an exemplary embodiment, the image interpretation level may be evaluated based on statistics image interpretation time, image processing method performed during the image interpretation, conclusion of the image interpretation (a ratio between interpreted suspected content and unsuspected content), and the number of interpreted suspected content without finding any prohibited substance. For example, the level is considered to be low if the average image interpretation time is relatively long, the number of image processing operations is relatively great, a ratio of interpreted suspected content is relatively high (far more than an average ratio), or the ratio of interpreted suspected content without finding any prohibited substance is relatively high; otherwise, the level is considered to be high. For example, the evaluation may be also performed based on input external data such as ranks of personnel set in a personnel management system (personnel with high rank is considered to have high level), working years (personnel with long working years is considered to have high level) and the like.

In an exemplary embodiment, the processor 520 includes a system for automatically assigning image interpretation task configured to automatically assign images, when the images are acquired, based on data from the X-ray image risk analysis system and the system for recording and analyzing security inspectors working according to following principles:
a principle of "distribution according to work": the image is assigned preferentially to a security inspector with more idle time;
a principle of "level matching": the image with a high risk degree is assigned preferentially to a security inspector having a high risk degree.

According to the method, system and apparatus for assigning image interpretation task, complexity of a security image is evaluated by means of image processing or substance identification algorithm, and an indicator is established to evaluate image interpretation level of security inspectors. Once a new security image is acquired, the image is assigned to a security inspector who has a corresponding level of image interpretation and is relatively idle according to the complexity degree of the image as well as the image interpretation level and workload of current security inspectors, so as to improve the overall quality and efficiency of the image interpretation.

Figs. 1-3 illustrate flow charts of the method for assigning image interpretation task according to exemplary embodiments of the disclosure, which may be implemented by the system and apparatus for assigning image interpretation task as shown in Fig. 4 or 5, but the disclosure is not limited thereto. It should be noted that Figs. 1, 2 and 3 are merely illustrative of the processing included in the method according to the exemplary embodiments of the present disclosure and are not intended to be limiting. It is easy to understand that the processes shown in Figs 1, 2 and 3 do not indicate or limit the chronological order of these processes. In addition, it is also easy to understand that these processes may be, for example, synchronously or asynchronously executed in multiple modules/processes/threads.

With description of the above embodiments, it will be readily understood by those skilled in the art that the exemplary embodiments described herein may be implemented by software or by means of software in combination with the necessary hardware. Thus, the technical solution according to the embodiments of the present disclosure may be embodied in the form of a software product which may be stored on a nonvolatile storage medium (which may be CD-ROM, flash memory, mobile hard disk and the like) or on a network, including a number of instructions for enabling a computing device (which may be a personal computer, a server, a mobile terminal, or a network device and the like) to perform the method according to exemplary embodiments of the present disclosure.

It will be understood by those skilled in the art that the drawings are merely schematic diagrams of exemplary embodiments and that the modules or processes in the drawings are not indispensably necessary to implement the present disclosure and are therefore not intended to limit the scope of the present disclosure.

It will be understood by those skilled in the art that the above-described modules may be distributed in the apparatus as described in the embodiments, or may be modified in one or more devices different from the present embodiment. The modules of the above-described embodiments may be combined into one module or may be further divided into a plurality of submodules.

Exemplary embodiments of the present disclosure are particularly shown and described as above. It is to be understood that the disclosure is not limited to the disclosed embodiments, but rather that the present disclosure is intended to cover various modifications and equivalent arrangements included within the scope of the appended claims.

## Claims

1. A computer-implemented method for assigning an image interpretation task, comprising:
acquiring (S110) a scanned packet image of a packet when the packet enters a security machine;
performing (S120) risk analysis on the scanned packet image to assess an image risk degree of the scanned packet image;
evaluating (S130) an image interpretation level for security inspectors of an image interpretation workstation; and
assigning (S140), based on a preset strategy, the scanned packet image to a corresponding image interpretation workstation according to the image risk degree and the image interpretation level,
**characterized in that** performing risk analysis on the scanned packet image to assess an image risk degree of the scanned packet image comprises:
analyzing (S250) a proportion of substances contained in the scanned packet image using a substance identification algorithm, the substances comprising organic matter, inorganic matter and/or mixtures; and
determining (S260) the image risk degree of the scanned packet image according to the proportion of substances,
wherein the method further comprises:
setting (S240) in advance a corresponding image risk degree for the scanned packet image based on the proportion of substances of the scanned packet image, and
wherein when the proportion of the substance is indicative of that the proportion of organic matter occupied in pixels of the scanned packet image is high, the image risk degree of the scanned packet image is considered to be high.

2. The method according to claim 1, wherein the performing risk analysis on the scanned packet image to assess an image risk degree of the scanned packet image comprises:
analyzing (S220) content complexity of the scanned packet image using an image processing algorithm; and
determining (S230) the image risk degree of the scanned packet image according to the content complexity.

3. The method according to claim 2, further comprising: setting (S210) in advance a corresponding content complexity based on a color and/or a shape of the scanned packet image.

4. The method according to claim 1, wherein the performing risk analysis on the scanned packet image to assess an image risk degree of the scanned packet image further comprises:
analyzing (S250) a category of substances contained in the scanned packet image using a substance identification algorithm; and
determining (S260) the image risk degree of the scanned packet image according to the category of substances.

5. The method according to claim 4, further comprising: setting (S240) in advance a corresponding image risk degree for the scanned packet image based on the category of substances of the scanned packet image.

6. The method according to claim 1, wherein the evaluating an image interpretation level for security inspectors of an image interpretation workstation comprises:
recording (S310) working hours and/or working habits and/or consistency and inconsistency between image interpretation conclusion and actual conclusion of the security inspectors;
counting (S320) average interpretation time and/or proportion of consistency between image interpretation conclusion and actual conclusion and/or image processing operations performed during the image interpretation of the security inspectors based on the working hours and/or the working habits and/or the consistency and inconsistency between image interpretation conclusion and actual conclusion; and
determining (S330) the image interpretation level for security inspectors according to the average interpretation time and/or the proportion of consistency between image interpretation conclusion and actual conclusion and/or the image processing operations performed during the image interpretation.

7. The method according to claim 1, wherein the evaluating (S340) an image interpretation level for security inspectors of an image interpretation workstation comprises:
evaluating the image interpretation level for security inspectors based on input external data.

8. The method according to claim 7, wherein the input external data comprises set levels of the security inspectors and/or service year and/or working experience.

9. The method according to claim 1, wherein the preset strategy comprises:
a principle of distribution according to work and/or a level matching principle, wherein
the principle of distribution according to work is implemented by assigning the scanned packet image preferentially according to idle time of the security inspectors; and
the level matching principle is implemented by assigning the scanned packet image to a security inspector having an image interpretation level corresponding to a risk degree.

10. The method according to claim 1, wherein the scanned packet image comprises an X-ray image.

11. An apparatus for assigning an image interpretation task, comprising:
a scanned packet image acquisition module (410) configured to acquire a scanned packet image of a packet when the packet enters a security machine;
an image risk degree analysis module (420) configured to perform risk analysis on the scanned packet image to assess an image risk degree of the scanned packet image;
an image interpretation level evaluation module (430) configured to evaluate an image interpretation level for security inspectors of an image interpretation workstations; and
an image interpretation task assignation module (440) configured to assign, based on a preset strategy, the scanned packet image to a corresponding image interpretation workstation according to the image risk degree and the image interpretation level,
**characterized in that** the image risk degree analysis module (420) is further configured to analyze a proportion of substances contained in the scanned packet image using a substance identification algorithm, the substances comprising organic matter, inorganic matter and/or mixtures; and determine the image risk degree of the scanned packet image according to the proportion of substances,
wherein the apparatus further comprises a second preset module configured to set in advance a corresponding image risk degree for the scanned packet image based on the proportion of substances of the scanned packet image, and
wherein when the proportion of the substance is indicative of that the proportion of organic matter occupied in pixels of the scanned packet image is high, the image risk degree of the scanned packet image is considered to be high.

12. An apparatus for assigning an image interpretation task according to claim 11, comprising a security machine (510), an image interpretation workstation (530) and a processor (520), the processor (520) is connected with the security machine (510) and the image interpretation workstation (530).

13. The apparatus according to claim 12, wherein the scanned packet image comprises an X-ray image.

## Patentansprüche

1. Computerimplementiertes Verfahren zur Zuweisung einer Bildinterpretationsaufgabe, umfassend:
Erfassen (S110) eines gescannten Paketbildes eines Pakets, wenn das Paket in eine Sicherheitsmaschine eintritt,
Durchführen (S120) einer Risikoanalyse an dem gescannten Paketbild, um einen Bildrisikograd des gescannten Paketbildes zu beurteilen,
Auswerten (S130) eines Bildinterpretationsniveaus für Sicherheitsinspektoren einer Bildinterpretationsarbeitsstation und
Zuweisen (S140), basierend auf einer voreingestellten Strategie, des gescannten Paketbildes zu einer entsprechenden Bildinterpretationsarbeitsstation gemäß dem Bildrisikograd und dem Bildinterpretationsniveau,
**dadurch gekennzeichnet, dass** das Durchführen einer Risikoanalyse an dem gescannten Paketbild, um einen Bildrisikograd des gescannten Paketbildes zu bewerten, umfasst
Analysieren (S250) eines Anteils von Substanzen, die in dem gescannten Paketbild enthalten sind, unter Verwendung eines Substanzidentifikationsalgorithmus, wobei die Substanzen organische Materie, anorganische Materie und/oder Mischungen umfassen, und
Bestimmen (S260) des Bildrisikogrades des gescannten Paketbildes gemäß dem Anteil von Substanzen,
wobei das Verfahren ferner umfasst:
Festlegen (S240) eines entsprechenden Bildrisikogrades für das gescannte Paketbild im Voraus, basierend auf dem Anteil von Substanzen des gescannten Paketbildes, und
wobei, wenn der Anteil von Substanzen darauf hinweist, dass der Anteil an organischer Materie, der in Pixeln des gescannten Paketbildes belegt wird, hoch ist, der Bildrisikograd des gescannten Paketbildes als hoch angesehen wird.

2. Verfahren nach Anspruch 1, wobei das Durchführen einer Risikoanalyse an dem gescannten Paketbild, um einen Bildrisikograd des gescannten Paketbildes zu bestimmen, umfasst:
Analysieren (S220) einer Inhaltskomplexität des gescannten Paketbildes unter Verwendung eines Verarbeitungsalgorithmus und
Bestimmen (S230) des Bildrisikogrades des gescannten Paketbildes gemäß der Inhaltskomplexität.

3. Verfahren nach Anspruch 2, ferner umfassend: Festlegen (S210) einer entsprechenden Inhaltskomplexität im Voraus basierend auf einer Farbe und/oder einer Form des gescannten Paketbildes.

4. Verfahren nach Anspruch 1, wobei das Durchführen einer Risikoanalyse an dem gescannten Paketbild, um einen Bildrisikograd des gescannten Paketbildes zu bestimmen, ferner umfasst:
Analysieren (S250) einer Kategorie von Substanzen, die in dem gescannten Paketbild enthalten sind, unter Verwendung eines Substanzidentifikationsalgorithmus und
Bestimmen (S260) des Bildrisikogrades des gescannten Paketbildes gemäß der Kategorie von Substanzen.

5. Verfahren nach Anspruch 4, ferner umfassend: Festlegen (S240) eines entsprechenden Bildrisikograd für das gescannte Paketbild im Voraus basierend auf der Kategorie von Substanzen des gescannten Paketbildes.

6. Verfahren nach Anspruch 1, wobei das Auswerten eines Bildinterpretationsniveaus für Sicherheitsinspektoren einer Bildinterpretationsarbeitsstation umfasst:
Aufzeichnen (S310) von Arbeitszeiten und/oder Arbeitsgewohnheiten und/oder einer Konsistenz und Inkonsistenz zwischen einer Bildinterpretationsfolgerung und einer tatsächlichen Folgerung der Sicherheitsinspektoren,
Zählen (S320) einer durchschnittlichen Interpretationszeit und/oder eines Übereinstimmungsverhältnisses zwischen der Bildinterpretationsfolgerung und der tatsächlichem Folgerung und/oder von Bildverarbeitungsvorgängen, die während der Bildinterpretation der Sicherheitsinspektoren durchgeführt werden, basierend auf den Arbeitszeiten und/oder den Arbeitsgewohnheiten und/oder Konsistenz und Inkonsistenz zwischen einer Bildinterpretationsfolgerung und einer tatsächlichen Folgerung und
Bestimmen (S330) des Bildinterpretationsniveaus für Sicherheitsinspektoren gemäß der durchschnittlichen Interpretationszeit und/oder dem Verhältnis der Konsistenz zwischen einer Bildinterpretationsfolgerung und einer tatsächlichen Folgerung und/oder den Bildverarbeitungsvorgängen, die während der Bildinterpretation der Sicherheitsinspektoren durchgeführt werden.

7. Verfahren nach Anspruch 1, wobei das Auswerten (S340) eines Bildinterpretationsniveaus für Sicherheitsinspektoren einer Bildinterpretationsarbeitsstation umfasst: Auswerten des Bildinterpretationsniveaus für Sicherheitsinspektoren basierend auf externe Eingabedaten.

8. Verfahren nach Anspruch 7, wobei die externen Eingabedaten festgelegte Stufen der Sicherheitsinspektoren und/oder Dienstjahre und/oder Arbeitserfahrung umfassen.

9. Verfahren nach Anspruch 1, wobei die voreingestellte Strategie umfasst: ein Verteilungsprinzip gemäß Arbeit und/oder einem Niveau-Angleichungs-Prinzip, wobei
das Prinzip der Verteilung nach Arbeit implementiert wird, indem das gescannte Paketbild vorzugsweise gemäß einer Leerlaufzeit der Sicherheitsinspektoren zugewiesen wird, und
das Niveau-Angleichungs-Prinzip implementiert wird, indem das gescannte Paketbild einem Sicherheitsinspektor zugewiesen wird, der ein Bildinterpretationsniveau hat, das einem Risikograd entspricht.

10. Verfahren nach Anspruch 1, wobei das gescannte Paketbild ein Röntgenbild umfasst.

11. Vorrichtung zur Zuweisung einer Bildinterpretationsaufgabe, umfassend:
ein Erfassungsmodul (410) für ein gescanntes Paketbild, das konfiguriert ist, ein gescannten Paketbildes eines Pakets, wenn das Paket in eine Sicherheitsmaschine eintritt, zu erfassen,
ein Bildrisikograd-Analysemodul (420), das konfiguriert ist, eine Risikoanalyse an dem gescannten Paketbild durchzuführen, um einen Bildrisikograd des gescannten Paketbildes zu bewerten,
ein Bildinterpretationsniveau-Auswertungsmodul (430), das konfiguriert ist, ein Bildinterpretationsniveau für Sicherheitsinspektoren einer Bildinterpretationsarbeitsstation zu bewerten und
ein Bildinterpretationsaufgaben-Zuweisungsmodul (440), das konfiguriert ist, basierend auf einer voreingestellten Strategie das gescannte Paketbild gemäß dem Bildrisikograd und dem Bildinterpretationsniveau einer entsprechenden Bildinterpretationsarbeitsstation zuzuweisen,
**dadurch gekennzeichnet, dass**
das Bildrisikograd-Analysemodul (420) ferner konfiguriert ist, einen Anteil von Substanzen, die in dem gescannten Paketbild enthalten sind, unter Verwendung eines Substanzidentifikationsalgorithmus zu analysieren, wobei die Substanzen organische Materie, anorganische Materie und/oder Mischungen umfassen, und den Bildrisikograd des gescannten Paketbildes gemäß dem Anteil von Substanzen zu bestimmen,
wobei die Vorrichtung ferner ein zweites voreingestelltes Modul umfasst, das konfiguriert ist, im Voraus einen entsprechenden Bildrisikograd für das gescannte Paketbild festzulegen, basierend auf dem Anteil von Substanzen des gescannten Paketbildes, und
wenn der Anteil von Substanz darauf hinweist, dass der Anteil an organischer Materie, der in Pixeln den gescannten Paketbildes belegt wird, hoch ist, der Bildrisikograd des gescannten Paketbildes als hoch angesehen wird.

12. Vorrichtung zur Zuweisung einer Bildinterpretationsaufgabe nach Anspruch 11, umfassend eine Sicherheitsmaschine (510), eine Bildinterpretationsarbeitsstation (530) und einen Prozessor (520), wobei der Prozessor (520) mit der Sicherheitsmaschine (510) und der Bildinterpretationsarbeitsstation (530) verbunden ist.

13. Vorrichtung nach Anspruch 12, wobei das gescannte Paketbild ein Röntgenbild umfasst.

## Revendications

1. Procédé, mis en oeuvre par ordinateur, d'attribution d'une tâche d'interprétation d'image, comprenant les étapes ci-dessous consistant à :
acquérir (S110) une image de paquet balayée d'un paquet lorsque le paquet entre dans une machine de sécurité ;
mettre en oeuvre (S120) une analyse de risque sur l'image de paquet balayée en vue d'évaluer un degré de risque d'image de l'image de paquet balayée ;
évaluer (S130) un niveau d'interprétation d'image pour des inspecteurs de sécurité d'un poste de travail d'interprétation d'image ; et
attribuer (S140), sur la base d'une stratégie prédéfinie, l'image de paquet balayée à un poste de travail d'interprétation d'image correspondant, selon le degré de risque d'image et le niveau d'interprétation d'image ;
**caractérisé en ce que**
l'étape de mise en oeuvre d'une analyse de risque sur l'image de paquet balayée en vue d'évaluer un degré de risque d'image de l'image de paquet balayée comprend les étapes ci-dessous consistant à :
analyser (S250) une proportion de substances contenues dans l'image de paquet balayée, en utilisant un algorithme d'identification de substances, les substances comprenant de la matière organique, de la matière inorganique et/ou des mélanges ; et
déterminer (S260) le degré de risque d'image de l'image de paquet balayée selon la proportion de substances ;
dans lequel le procédé comprend en outre l'étape ci-dessous consistant à :
définir (S240) au préalable un degré de risque d'image correspondant pour l'image de paquet balayée sur la base de la proportion de substances de l'image de paquet balayée ; et
dans lequel, lorsque la proportion de la substance indique que la proportion de matière organique occupée dans des pixels de l'image de paquet balayée est élevée, le degré de risque d'image de l'image de paquet balayée est considéré comme élevé.

2. Procédé selon la revendication 1, dans lequel l'étape de mise en oeuvre d'une analyse de risque sur l'image de paquet balayée en vue d'évaluer un degré de risque d'image de l'image de paquet balayée comprend les étapes ci-dessous consistant à :
analyser (S220) une complexité de contenu de l'image de paquet balayée, en faisant appel à un algorithme de traitement d'image ; et
déterminer (S230) le degré de risque d'image de l'image de paquet balayée selon la complexité de contenu.

3. Procédé selon la revendication 2, comprenant en outre l'étape consistant à :
définir (S210) au préalable une complexité de contenu correspondante sur la base d'une couleur et/ou d'une forme de l'image de paquet balayée.

4. Procédé selon la revendication 1, dans lequel l'étape de mise en oeuvre d'une analyse de risque sur l'image de paquet balayée en vue d'évaluer un degré de risque d'image de l'image de paquet balayée comprend en outre les étapes ci-dessous consistant à :
analyser (S250) une catégorie de substances contenues dans l'image de paquet balayée, en faisant appel à un algorithme d'identification de substances ; et
déterminer (S260) le degré de risque d'image de l'image de paquet balayée selon la catégorie de substances.

5. Procédé selon la revendication 4, comprenant en outre l'étape consistant à :
définir (S240) au préalable un degré de risque d'image correspondant pour l'image de paquet balayée, sur la base de la catégorie de substances de l'image de paquet balayée.

6. Procédé selon la revendication 1, dans lequel l'étape d'évaluation d'un niveau d'interprétation d'image pour des inspecteurs de sécurité d'un poste de travail d'interprétation d'image comprend les étapes ci-dessous consistant à :
enregistrer (S310) des heures de travail et/ou des habitudes de travail et/ou une cohérence et une incohérence entre une conclusion d'interprétation d'image et une conclusion effective des inspecteurs de sécurité ;
compter (S320) un temps d'interprétation moyen et/ou une proportion de cohérence entre une conclusion d'interprétation d'image et une conclusion effective et/ou des opérations de traitement d'image mises en oeuvre au cours de l'interprétation d'image des inspecteurs de sécurité sur la base des heures de travail et/ou des habitudes de travail et/ou de la cohérence et de l'incohérence entre la conclusion d'interprétation d'image et la conclusion effective ; et
déterminer (S330) le niveau d'interprétation d'image pour des inspecteurs de sécurité selon le temps d'interprétation moyen et/ou la proportion de cohérence entre la conclusion d'interprétation d'image et la conclusion effective et/ou les opérations de traitement d'image mises en oeuvre au cours de l'interprétation d'image.

7. Procédé selon la revendication 1, dans lequel l'étape d'évaluation (S340) d'un niveau d'interprétation d'image pour des inspecteurs de sécurité d'un poste de travail d'interprétation d'image consiste à : évaluer le niveau d'interprétation d'image pour des inspecteurs de sécurité sur la base de données externes d'entrée.

8. Procédé selon la revendication 7, dans lequel les données externes d'entrée comprennent des niveaux définis des inspecteurs de sécurité et/ou une année de service et/ou une expérience professionnelle.

9. Procédé selon la revendication 1, dans lequel la stratégie prédéfinie comprend : un principe de répartition selon le travail et/ou un principe de correspondance de niveau, dans lequel
le principe de distribution selon le travail est mis en oeuvre en attribuant l'image de paquet balayée de préférence selon un temps d'inactivité des inspecteurs de sécurité ; et
le principe de correspondance de niveau est mis en oeuvre en attribuant l'image de paquet balayée à un inspecteur de sécurité ayant un niveau d'interprétation d'image correspondant à un degré de risque.

10. Procédé selon la revendication 1, dans lequel l'image de paquet balayée comprend une image radiographique.

11. Appareil destiné à attribuer une tâche d'interprétation d'image, comprenant :
un module d'acquisition d'image de paquet balayée (410) configuré de manière à acquérir une image de paquet balayée d'un paquet lorsque le paquet entre dans une machine de sécurité ;
un module d'analyse de degré de risque d'image (420) configuré de manière à mettre en oeuvre une analyse de risque sur l'image de paquet balayée en vue d'évaluer un degré de risque d'image de l'image de paquet balayée ;
un module d'évaluation de niveau d'interprétation d'image (430) configuré de manière à évaluer un niveau d'interprétation d'image pour des inspecteurs de sécurité d'un poste de travail d'interprétation d'image ; et
un module d'attribution de tâche d'interprétation d'image (440) configuré de manière à attribuer, sur la base d'une stratégie prédéfinie, l'image de paquet balayée, à un poste de travail d'interprétation d'image correspondant, selon le niveau de risque d'image et le niveau d'interprétation d'image,
**caractérisé en ce que**
le module d'analyse de degré de risque d'image (420) est en outre configuré de manière à analyser une proportion de substances contenues dans l'image de paquet balayée, en faisant appel à un algorithme d'identification de substances, les substances comprenant de la matière organique, de la matière inorganique et/ou des mélanges ; et à déterminer le degré de risque d'image de l'image de paquet balayée selon la proportion de substances ;
dans lequel l'appareil comprend en outre un second module prédéfini configuré de manière à définir au préalable un degré de risque d'image correspondant pour l'image de paquet balayée sur la base de la proportion de substances de l'image de paquet balayée ; et
dans lequel, lorsque la proportion de la substance indique que la proportion de matière organique occupée dans des pixels de l'image de paquet balayée est élevée, le degré de risque d'image de l'image de paquet balayée est considéré comme élevé.

12. Appareil destiné à attribuer une tâche d'interprétation d'image selon la revendication 11, comprenant une machine de sécurité (510), un poste de travail d'interprétation d'image (530) et un processeur (520), dans lequel le processeur (520) est connecté à la machine de sécurité (510) et au poste de travail d'interprétation d'image (530).

13. Appareil selon la revendication 12, dans lequel l'image de paquet balayée comprend une image radiographique.
